# EUROPEAN PATENT APPLICATION

(11) **EP 2 178 000 A2**
(43) Date of publication of application: **21.04.2010**
(21) Application number: 10001222.8
(22) Date of filing: 11.06.2001
(51) Int. Cl.: G06F 17/00, F24F 11/02, H04Q 9/00

(54) **Device control method and device control device as well as device repairing system**

(30) Priority: 14.06.2000 JP 2000178241
(62) Divisional of application: 01938599.6
(71) Applicant: Daikin Industries, Ltd., Osaka-shi, Osaka 530-8323 (JP)
(72) Inventor: Imada, Nobuhiro, Sakai-shi Osaka 591-8511 (JP)
(74) Representative: Winter, Brandl, Fürniss, Hübner Röss, Kaiser, Polte Partnerschaft Patent- und Rechtsanwaltskanzlei

(57) **Abstract**

An object of the present invention is to provide a technique which, upon detection of failure in a device such as an air conditioner, performs diagnosis of the failure, an emergency run and the like of the appliance. When failure occurs on devices (3₁, 3₂ 3₃, ...), failure information (51) is transmitted to a control center (4) through a communication network (9). The control center (4) allows the device (3) which is the transmission side of the failure information (51) to load failure diagnosis program (61). The device (3) activates the failure diagnosis program (61), so that the failure diagnosis is carried out, and failure position information (53) is transmitted to the control center (4). When it is possible to perform the emergency run, the device (3) is allowed to load an emergency run program (62) from the control center (4), so that the device (3) performs the emergency run. The control center (4) gives repairing information (64) based on the result of the failure diagnosis to a service person (8), whereby the service person (8) enables to easily carry out a repairing job (65) on the device (3) quickly.

## Description

### TECHNICAL FIELD

The present invention relates to a technique which, upon detection of failure of a device such as an air conditioner, performs diagnosis of the failure, an emergency run and repair of the device.

### BACKGROUND ART

Conventionally, there has been a system which transmits information with respect to a running state to a control center through a communication network in order to recognize the running state of a device such as an air conditioner. In such a system, the control center has determined whether or not failure occurs in the device by recognizing running states, such as the number of revolutions in a compressor or the temperature of a suction inlet. Then, it has been determined that there is failure in the device, a service person is dispatched so as to repair the corresponding device.

However, upon dispatching a service person, it is desirable to preliminarily know repairing parts required for the repairing job accurately. Moreover, the failure might be further developed by continuously running the device in spite of the failure. In contrast, there is a case where an emergency run needs to be performed on the device in spite of the failure so as to meet the demand of the user of the device.

### DISCLOSURE OF THE INVENTION

An object of the present invention is to provide a technique which, upon detection of failure of a device such as an air conditioner, performs diagnosis of the failure, an emergency run and the like of the device, so as to meet the above-mentioned demands.

According to a first aspect of the present invention, a device control method includes (a) a step (S21) of transmitting failure diagnosis program (61) for diagnosing contents of failure in a device from an external portion (4) to the device, in response to failure information (51) obtained in the device (3) or in response to a result of whether failure is present in the device or not, where the result is externally determined in response to running data (52) obtained from the device (3).

Preferably, the device control method further includes (b) a step (S22) of allowing the device to diagnose itself with respect to the failure on the basis of the failure diagnosis program.

According to a second aspect of the present invention, the device control method according to the first aspect further includes (c) a step (S25) of allowing the device to perform an emergency run on itself.

Preferably, the device control method further includes (d) a step (S24) of transmitting an emergency run program (62) for performing the emergency run from the external portion to the device.

According to a third aspect of the present invention, the device control method according to the second aspect further includes (e) a step (S16) of, on the basis of a result of diagnosis (53) obtained in the step (b), determining whether or not it is permitted to perform the emergency run. The step (c) or/and the step (d) is/are executed when the emergency run is permitted at the step (e).

According to a fourth aspect of the present invention, a device control method includes (a) a step (S24) of transmitting an emergency run program (62) for performing an emergency run on a device from an external portion (4) to the device, in response to failure information (51) obtained in the device (3) or in response to a result of whether failure is present in the device or not as well as contents of the failure, where the result is externally determined in response to running data (52) obtained from the device (3).

Preferably, the device control method further includes (b) a step (S25) of allowing the device to perform the emergency run on the basis of the emergency run program.

According to a fifth aspect of the present invention, a device repairing system according to the forth aspect further includes (c) a step (S16) of, on the basis of the failure information, determining whether or not it is permitted to perform the emergency run, and the step (b) is executed when the emergency run is permitted at the step (c).

According to a sixth aspect of the present invention, a device repairing system includes a device (3) and a control portion (4) which are mutually connected through a predetermined communication path (9). In response to failure information (51) sent from the device or in response to a result of whether failure is present in the device or not, where the result is externally determined in response to running data (52) from the device, the control portion transmits at least one of failure diagnosis program (61) for diagnosing the failure in the device and an emergency run program (62) for performing an emergency run of the device to the device.

Preferably, the device receives the emergency run program from the control portion, and on the basis of the emergency run program, performs the emergency run on itself.

Preferably, the device receives the failure diagnosis program from the control portion, and on the basis of the failure diagnosis program, diagnoses failure in itself, and transmits failure position information (53) indicating a position of the failure to the control portion.

According to a seventh aspect of the present invention, in the device repairing system according to the sixth aspect, repairing information (64) based upon the failure position information is given from the control portion to a service person carrying out a repairing job (61).

According to an eighth aspect of the present invention, a device control device (4), in response to device information (51, 52, 53) received from a device (3), transmits failure program (61) for diagnosing failure of the device to the device (S21).

According to a ninth aspect of the present invention, a device control device (4), in response to device information (51, 52, 53) received from a device (3), transmits an emergency run program (62) for performing an emergency run on the device to the device (S24).

In the eighth and ninth aspects, preferably, the device information is failure information (51, 53) indicating failure in the device.

In the eighth aspect, preferably, the device information is running data (52) of the device, and in response to the running data, the presence or absence of failure in the device is determined, and on the basis of a result of the determination, the failure program is transmitted to the device.

In the ninth aspect, preferably, the device information is running data (52) of the device, and in response to the running data, contents of failure in the device are determined, and on the basis of the results of the determination, the emergency run program is transmitted to the device.

In the device control method according to the first aspect of the present invention, in the event of failure in the device, the device can diagnose itself for the failure in accordance with, for example, step (b), without the necessity of operations by the service person. Moreover, since the failure diagnosis program is transmitted thereto from an external portion at step (a), it is not necessary for the device to install the failure diagnosis program during normal operations.

In the device control method according to the second aspect of the present invention, in the event of failure in the device, the device itself can perform the emergency run in accordance with, for example, step (c), without the necessity of operations by the service person. Moreover, in the case where the emergency run program is transmitted from an external portion at step (d), it is not necessary for the device to install the emergency run program during normal operations.

In the device control method according to the third aspect and the device control method according to the fifth aspect, an emergency run is performed only when the emergency run is permitted; therefore, it is possible to avoid any emergency run in the case where further failure is predicted.

In the device control method according to the fourth aspect of the present invention, even in the event of failure in the device, the device itself can perform the emergency run in accordance with, for example, step (b), if necessary, without the necessity of operations by the service person. Since the emergency run program is transmitted from an external portion at step (a), it is not necessary for the device to install the emergency run program during normal operations.

In the device repairing system according to the sixth aspect of the present invention, in the event of failure in the device, the device itself can perform failure diagnosis or an emergency run without the necessity of operations by the service person. Moreover, since the programs for performing the failure diagnosis and for the emergency run are transmitted from the control portion, it is not necessary for the device to install these programs during normal operations.

In the device repairing system according to the seventh aspect of the present invention, since, on the basis of failure position information given to the control portion, repairing information is given to the service person; therefore, the service person is allowed to preliminarily prepare parts required for the repairing job so that it is possible to easily carry out the repairing job quickly.

In the device control device according to the eighth aspect of the present invention, in the event of any failure in the device, the device itself can perform failure diagnosis without the necessity of operations by the service person. Moreover, since the program for performing the failure diagnosis is transmitted from the device control portion, it is not necessary for the device to install the program during normal operations.

In the device control device according to the ninth aspect of the present invention, in the event of failure in the device, the device itself can perform an emergency run without the necessity of operations by the service person. Moreover, since the program for performing the emergency run is transmitted from the device control portion, it is not necessary for the device to install the program during normal operations.

These and other objects, features, aspects and advantages of the present invention will become more apparent in conjunction with the following detailed description and the accompanying drawings.

### BRIEF DESCRIPTION OF THE DRAWINGS

Fig. 1 is a block diagram exemplifying an embodiment of the present invention;
Fig. 2 is a flow chart showing operations in a first embodiment; and
Fig. 3 is a flow chart showing operations in a second embodiment.

### BEST MODE FOR CARRYING OUT THE INVENTION

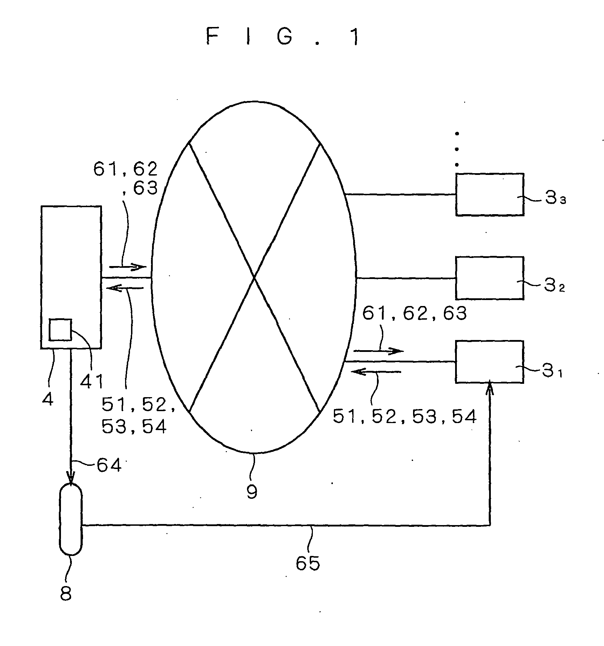

Fig. 1 is a block diagram exemplifying an embodiment of the present invention. Here, at least one device, for example, a plurality of devices, such as air conditioners 3₁, 3₂, 3₃, ... (these may be indicated by reference numeral 3 as a whole), are connected to a control center 4 through a communication network 9. Not limited to a cable or radio system, the communication network 9 may be provided as a public telephone line system or a satellite communication system, or the Internet, a packet communication network.

### First Embodiment

The present embodiment will propose a technique which, even in the event of failure in the air conditioner 3, performs an emergency run so that it becomes possible to alleviate inconvenience imposed on the user of the device due to the failure.

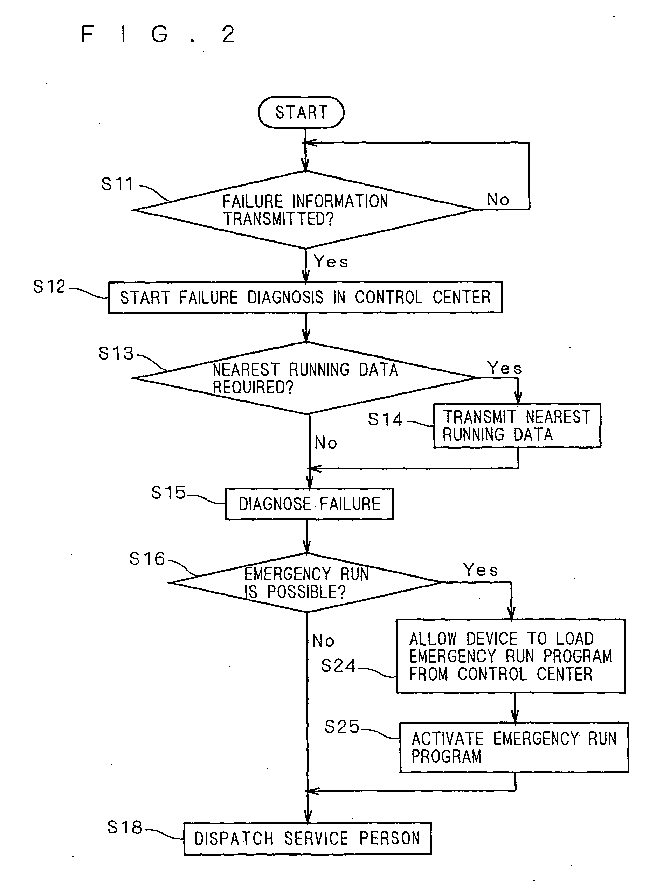

Fig. 2 is a flow chart showing the operations of the present embodiment. At step S11, a control center 4 determines whether or not failure information has been transmitted. If failure information 51 has been given to the control center 4 from the air conditioner 3 through a communication network 9, the determination of step S11 is given as "YES", and the process proceeds to step S12. If the failure information 51 has not been given to the control center 4, the determination of step S11 is given as "NO", and step S11 is repeated.

At step S12, the control center 4 start to diagnose the failure on the basis of the failure information 51. If it is determined at step S13 that nearest running data 52 is required, the process proceeds to step S14. Then, the nearest running data 52 is transmitted to the control center 4 from the air conditioner 3 which is the transmission side of the failure information 51, through the communication network 9. If it is determined at step S 13 that the nearest running data 52 is not required, and when step S 14 has been completed, the process proceeds to step S15 where the diagnosis of failure is performed.

Here, various diagnosing procedures for failure are assumed, and for example, the following diagnosing procedures are given.

### (i) Diagnosis on valves, piping system and the amount of coolant of air conditioner

With respect to the air conditioner 3 which is the transmission side of the failure information 51, first, various valves, such as electric valves, electromagnetic valves and four-way switching valves, that are operable electrically as well as mechanically are successively operated. Data 54 indicating how the high pressure, low pressure, the temperatures of the inlet and outlet of a condenser, the temperatures of the inlet and outlet of an evaporator and the like of the air conditioner 3 react (hereinafter, referred to as "reaction data") in response to such operations is obtained through the communication network 9.

For example, the control center 4 is provided with a storing device 41 in which reaction data during the normal operation is stored. Thus, the reaction data 54, obtained upon receipt of the failure information 51, is compared with the reaction data during the normal operation so that an abnormal state in the valves, clogging of the pipes and the suitability of the amount of coolant are diagnosed.

### (ii) Diagnosis on compressor

A compressor is activated, or in the case of a plurality of compressors, the compressors are successively activated to obtain the resulting reaction data 54. In the same manner as (i), the reaction data 54 is compared with reaction data during the normal operation stored in the storing device 41 so as to predict a compressor having any failure.

The processes of step S12 to S15 may be executed on the basis of failure diagnosis program provided in the control center 4, or may be carried out manually.

The process proceeds from step S15 to S 16 where on the basis of the results of the above-mentioned failure diagnosis, the control center 4 determines whether or not it is permitted to perform an emergency run. In the case of failure to which no emergency run is permitted, the process proceeds to step S18, and a service person is dispatched. However, in the case of failure that it is possible to perform an emergency run, the process proceeds to step S24, where an emergency run program 62 is transmitted to the air conditioner 3 from the control center 4 through the communication network 9 so as to be loaded therein. In other words, upon receipt of the failure information 51 from the air conditioner 3, the emergency run program 62 is transmitted from the, control center 4. At step S25, the air conditioner 3 activates the emergency run program. Then, the process proceeds to step S18. The emergency run program 62 may be stored in, for example, the storing device 41.

With respect to the emergency run, for example, in a system where two compressors are used in combination, if one of the compressors has failure, the other compressor is used so as to continue the running operation. In such a case, of course, there is a possibility that, depending on the cause of the failure of one of the compressors, the continuous running operation performed by the other compressor might further cause failure in the other compressor. Taking such a possibility into consideration, step S16 is prepared. In other words, in the case when the occurrence of another failure is predicted, the emergency run is avoided.

As described above, in the event of failure in the air conditioner 3, the air conditioner 3 itself is allowed to perform an emergency run, if necessary, without the necessity of operations by the service person 8. Thus, the user of the air conditioner 3 is allowed to avoid inconvenience since, even in the event of failure in the air conditioner 3, the air conditioner 3 is not necessarily stopped, and it is also possible to reduce the stoppage of the running operation for the repairing job to a minimum. Further, since the emergency run program 62 is transmitted from the control center 4, it is not necessary for the air conditioner 3 to install the emergency run program 62 during the normal operation.

Additionally, in the case where there are a plurality of air conditioners 3 to transmit the failure information 51 to the control center 4, by diagnosing the respective failures, it becomes possible to determine which air conditioner 3 a service person needs to be preferentially dispatched to.

Moreover, since the failure diagnosis is performed in the control center 4, it is possible to give the repairing information 64 indicating parts required for the repairing job from the control center 4 to the service person 8. Therefore, the service person 8 can easily carry out the repairing job 65 on the air conditioner 3.

The air conditioner 3 may of course preliminarily have the emergency run program 62. This case makes the loading process of the emergency run program unnecessary. However, a run permission 63 for permitting an emergency run is transmitted from the control center 4 to the air conditioner 3. In other words, step S24 should be read as "transmission of the run permission". In the case where the run permission 63 is not transmitted, the emergency run is not performed by the air conditioner 3 so as to avoid the emergency run upon prediction of the occurrence of further failure. This corresponds to the fact that, as a result "NO" of determination at step S16, the process proceeds not to step S24, but to step S18.

Here, the failure information 51 is not necessarily sent from the air conditioner 3, and nearest running data 52 is transmitted so that a determination is made outside the air conditioner 3 as to the presence or absence of failure, and the results of the determination may be sent to the control center 4 in place of the failure information 51. Alternatively, the nearest running data 52 is transmitted to the control center 4, and the control center 4 may make a determination as to the presence or absence of failure. In this case, step S11 should be read as "Is failure in the device detected by the nearest running data transmitted?" In this case, the control center 4 diagnoses the presence or absence of failure and the contents of the failure, on the basis of the nearest running data 52. In other words, in response to the running data 52 obtained from the air conditioner 3, the control center determines the presence or absence of failure in the air conditioner 3 and the contents thereof, and on the basis of the determination, the emergency run program 62 is transmitted from the control center 4. In this case, since the nearest running data 52 has already been transmitted to the control center 4 as the premise of step S11, it is possible to omit steps S 13, S 14.

### Second Embodiment

The present embodiment will propose a technique in which, in the event of any failure in the air conditioner 3, the air conditioner 3 is allowed to diagnose itself.

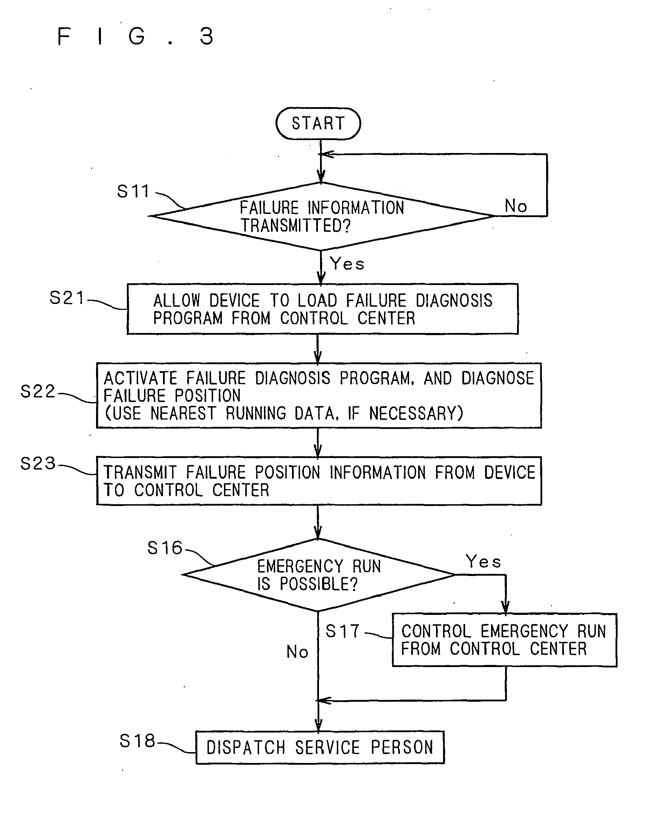

Fig. 3 is a flow chart showing operations of the present embodiment. Step S11 is executed in the same manner as the first embodiment, and when the determination is "YES", the process proceeds to step S21. As described in the first embodiment, step S11 may be read as "Is failure in the device detected by the nearest running data transmitted?".

At step S21, the failure diagnosis program 61 for allowing the air conditioner 3 to diagnose itself for the contents of the failure is loaded therein from the control center 4. The failure diagnosis program 61 may be stored in, for example, the storing device 41.

Therefore, in response to the fact that the failure information 51 has been obtained from the air conditioner 3, the failure diagnosis program 61 is transmitted to the air conditioner 3 from the control center 4. Alternatively, on the basis of the running data 52, it is determined outside the air conditioner 3 that there is failure of the air conditioner 3, and in response to the result of the determination, the failure diagnosis program 61 is transmitted to the air conditioner 3 from the control center 4.

The failure diagnosis program 61 may of course be preliminarily installed in the air conditioner 3, and in this case, step S21 can be omitted.

The process proceeds to step S22, and the air conditioner 3 activates the failure diagnosis program 61 loaded therein. The failure diagnosis program 61 is executed in a manner, for example, as shown in (i) and (ii) of the first embodiment.

In this case, the nearest running data 52 is used, if necessary; however, different from the first embodiment, since the air conditioner 3 diagnoses itself for failure, it is not necessary to transmit the nearest running data 52 to the control center 4. Instead, in the succeeding step S23, on the basis of the failure diagnosis, failure position information 53, which indicates the position of failure or contains specific contents of the failure, is transmitted to the control center 4 from the air conditioner 3.

In the same manner as the first embodiment, at step S16, on the basis of the failure position information 53, the control center 4 determines whether or not the failure in the air conditioner 3 which transmits the failure information 51 permits an emergency run. In the case where the emergency run is not permitted, the process proceeds to step S 18 in the same manner as the first embodiment.

In the case where the emergency run is permitted, different from the first embodiment, the control center 4 controls the emergency run at step S17. The processes at step S17 may be executed on the basis of the emergency run program provided in the control center 4, or may be carried out manually.

As described above, in the event of failure in the air conditioner 3, the air conditioner 3 itself is allowed to perform failure diagnosis, if necessary, without the necessity of operations by the service person 8. Moreover, with an arrangement in which the failure diagnosis program 61 is transmitted from the control center 4, it is not necessary for the air conditioner 3 to have the failure diagnosis program 61 during the normal operation. Furthermore, an emergency run is performed, if permitted, so that the user of the air conditioner 3 is allowed to avoid inconvenience due to the stoppage of the air conditioner 3, and it is also possible to reduce the stoppage of the running operation for the repairing job to a minimum.

Moreover, in the same manner as the first embodiment, it becomes easy to determine which air conditioner 3 a service person needs to be preferentially dispatched to, and the control center 4 gives repairing information 64 so that the service person 8 is allowed to easily carry out the repairing job 65 quickly.

Furthermore, step S17 may be replaced by two steps S24, S25 described in the first embodiment. Thus, the air conditioner 3 is allowed to perform an emergency run on itself. Here, in the case where the air conditioner 3 is preliminarily provided with the emergency run program, step S24 should be read as "transmission of the run permission", as described in the first embodiment.

While the present invention has been described in detail, the above description is in all aspects and the present invention is not restricted thereto. It will be understood that numerous variants which are not illustrated can be supposed without departing from the scope of the invention.

## Claims

1. A device control method comprising:
(a) a step (S21) of, in response to running data (52) obtained from a device (3), externally determining the presence or absence of failure in said device and transmitting failure diagnosis program (61) for diagnosing contents of said failure in said device in response to a result of said determination from an external portion (4) to said device.

2. The device control method according to claim 1, further comprising:
(b) a step (S22) of allowing said device to diagnose itself with respect to said failure on the basis of said failure diagnosis program.

3. The device control method according to claim 1, further comprising:
(c) a step (S25) of allowing said device to perform an emergency run on itself.

4. The device control method according to claim 3, further comprising:
(d) a step (S24) of transmitting an emergency run program (62) for performing said emergency run from said external portion to said device.

5. The device control method according to claim 3, further comprising:
(e) a step (S16) of, on the basis of a result of diagnosis (53) obtained in said step (b), determining whether or not it is permitted to perform said emergency run, wherein said step (c) is executed when said emergency run is permitted at said step (e).

6. The device control method according to claim 4, further comprising:
(e) a step (S16) of, on the basis of a result of diagnosis (53) obtained in said step (b), determining whether or not it is permitted to perform said emergency run, wherein said step (c) and step (d) are executed when said emergency run is permitted at said step (e).

7. A device control device (4) which, in response to device information (51, 52, 53) received from a device (3), transmits failure diagnosis program (61) for diagnosing failure of said device to said device (S21).

8. The device control device (4) according to claim 7, wherein
said device information is failure information (51, 53) indicating failure in said device.

9. The device control device (4) according to claim 7, wherein
said device information is running data (52) of said device, and in response to said running data, the presence or absence of failure in said device is determined, and on the basis of a result of said determination, said failure program is transmitted to said device.

10. A device repairing system, comprising
a device control device of any one of claims 7 to 9 and said device (3), which are mutually connected through a predetermined communication path (9).
